# FASCICULE DE BREVET EUROPEEN

(11) **EP 3 103 726 B1**
(45) Date de publication et mention de la délivrance du brevet: **15.04.2020**
(21) Numéro de dépôt: 16173218.5
(22) Date de dépôt: 07.06.2016
(51) Int. Cl.: B64D 43/00, G01C 23/00

(54) **PANNEAU DE COMMANDE CONFIGURABLE POUR COCKPIT D'AÉRONEF ET PROCÉDÉ DE CONFIGURATION D'UN TEL PANNEAU**
KONFIGURIERBARE SCHALTTAFEL FÜR COCKPIT EINES LUFTFAHRZEUGS, UND KONFIGURATIONSVERFAHREN EINER SOLCHEN TAFEL
CONFIGURABLE CONTROL PANEL FOR AIRCRAFT COCKPIT AND METHOD FOR CONFIGURING SUCH A PANEL

(30) Priorité: 11.06.2015 FR 1555327
(43) Date de publication de la demande: 14.12.2016
(73) Titulaire: Zodiac Aero Electric, 93100 Montreuil (FR)
(72) Inventeur: DE BOSSOREILLE, Romain, 75017 Paris (FR); NAHMIYACE, Michael, 94130 Nogent S/Marne (FR)
(74) Mandataire: Casalonga

(56) Documents cités:
- WO-A2-2007/005658
- US-B1- 7 191 406
- US-B1- 8 264 376

## Description

La présente invention concerne, de manière générale, les panneaux de commande de cockpit pour aéronef et concerne, dans une application intéressante mais non limitative de l'invention, un panneau de commande de plafonnier, situé au-dessus du pilote et/ou du copilote, d'un cockpit d'aéronef.

Les panneaux de commandes pour cockpit actuels comportent un certain nombre d'organes de commande dits d'interface homme machine de diverses natures, de type bouton rotatif, bouton poussoir, interrupteur ou autres, manipulables manuellement par le pilote et par le copilote pour la commande d'une fonction et ou l'asservissement de systèmes embarqués.

Les panneaux de commandes pour cockpit actuels sont dédiés à la commande d'une fonction ou à l'asservissement d'un système prédéterminé de sorte qu'il existe, pour chacun des systèmes avec lequel le pilote ou le copilote de l'aéronef interagit, un panneau de commande spécifique comprenant un ou plusieurs composants d'activation dédiés au système ou à la fonction pilotée.

Ainsi, les composants d'activation, et, de manière générale, les panneaux de commandes pour cockpit comportent des informations et des indications qui sont figées, en étant gravées lors de la fabrication sur des verrines ou des faces avant éclairées, et dédiées aux fonctions et systèmes commandés.

Ces informations et indications correspondent uniquement à des états de composants d'un système d'aéronef auquel est affecté un panneau (voir le document WO2007005658A2).

La personnalisation ou la configuration des panneaux de commandes pour cockpit, par exemple pour les affecter à d'autres systèmes ou pour y ajouter d'autres fonctionnalités n'est possible qu'à condition de changer des composants mécaniquement intégrés et câblés dans les panneaux de commandes. Ces modifications sont donc très contraignantes et très coûteuses puisqu'elles nécessitent la dépose et l'intervention d'opérateurs qualifiés ainsi que la fabrication de nouveaux composants.

Aussi, un but de l'invention est de pallier cet inconvénient et de proposer un panneau de commande pour cockpit configurable permettant en outre de réduire le nombre de composants d'un cockpit d'aéronef et de câblages associés.

L'invention a donc pour objet, selon un premier aspect, un panneau de commande configurable pour cockpit d'aéronef selon la revendication 1 comprenant un ensemble de modules de commande génériques comprenant chacun au moins un écran associé à un ensemble d'au moins un organe de commande manipulable manuellement, les modules de commande comprenant au moins un module maître et au moins un module esclave générique associé au module maître et comprenant un écran et au moins un organe de commande, le module maître étant adapté pour configurer l'écran et ledit au moins un organe de commande dudit module esclave générique.

On rend ainsi les composants génériques à l'activation de différentes fonctions elles-mêmes rattachées à différents systèmes.

Selon une autre caractéristique, l'organe de commande du module maître constitue un organe de sélection de systèmes fonctionnels, ledit module esclave étant configurable en fonction d'une sélection d'un système fonctionnel.

Le panneau de commande peut en outre comporter un ensemble d'au moins un module de commande non configurable dédiés chacun à la commande d'une fonction.

Selon encore une autre caractéristique, les modules de commande maître et esclave sont associés à au moins une unité de calcul comprenant un algorithme de commande du panneau de commande.

Dans un mode de réalisation, les modules de commande esclaves peuvent comporter chacun une unité de calcul apte à configurer l'affichage sur l'écran et à configurer les organes de commande en fonction d'une configuration imposée par le module de commande maître.

Avantageusement, les organes de commande comportent au moins un élément choisi parmi un organe de commande numérique et un organe de commande électromécanique.

En ce qui concerne l'écran, celui-ci peut être tactile ou non tactile.

L'invention a également pour objet, selon un deuxième aspect, un procédé de configuration d'un panneau de commande configurable pour aéronef tel que défini ci-dessus, comprenant les étapes de :
- manipulation d'un module de commande maître pour la sélection d'un système fonctionnel ; et
- configuration de l'écran et d'un ensemble d'au moins un organe de commande d'un ensemble de modules de commande esclave en fonction de la sélection du système fonctionnel.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue générale d'un panneau de commande configurable pour aéronef conforme à l'invention ; et
- la figure 2 est un schéma synoptique d'une partie du panneau de commande de la figure 1.

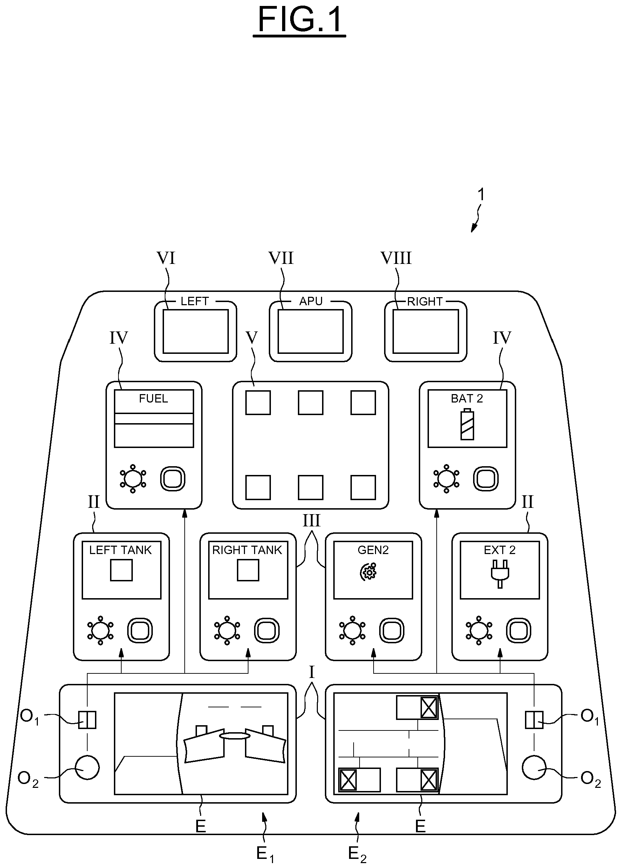

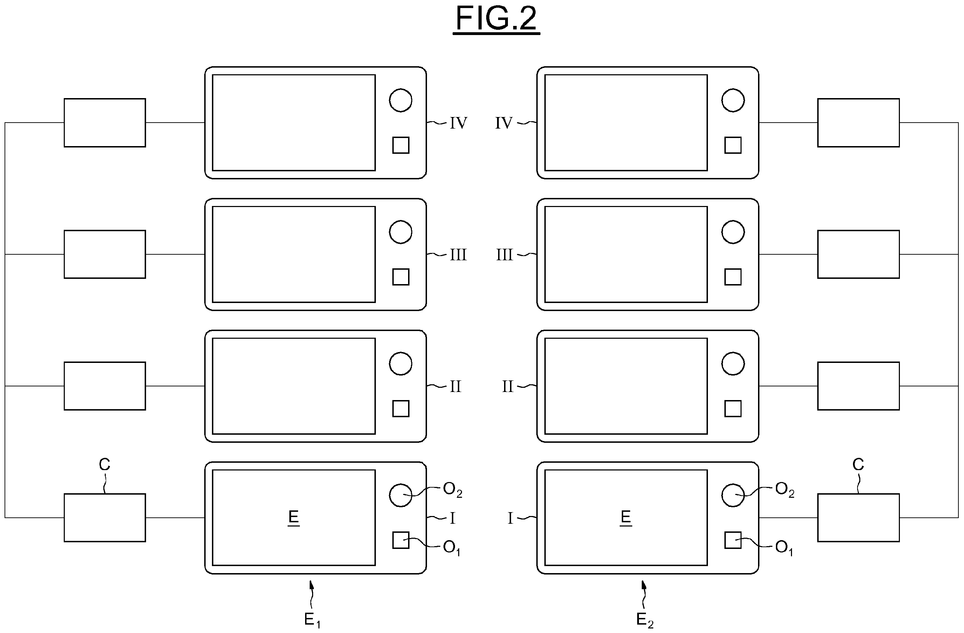

Sur les figures 1 et 2, on a représenté un panneau de commande pour aéronef, désigné par la référence numérique générale 1.

Ce panneau de commande est par exemple, mais non exclusivement, destiné à constituer un panneau de commande d'un plafonnier de commande de cockpit d'aéronef, c'est-à-dire un panneau de commande destiné à être positionné au dessus de la tête du pilote et/ou du copilote.

Comme on le voit, le panneau de commande comporte un ensemble de modules de commande comprenant chacun un écran E tactile ou non tactile, associé à un organe de commande O1, O2 assurant, notamment, la sélection d'informations présentées sur l'écran E, la configuration ou l'asservissement de systèmes fonctionnels pilotés par le panneau 1 et la commande d'une ou de plusieurs fonctions des systèmes de l'aéronef.

Le panneau de commande 1 comporte ici deux ensembles E1 et E2 de modules de commande destinés respectivement à l'affichage d'informations et au pilotage de fonctions par le pilote d'une part et par le copilote d'autre part.

Dans l'exemple de réalisation représenté sur les figures 1 et 2, chaque ensemble de module de commande comporte quatre modules de commande. Bien entendu, on ne sort pas du cadre de l'invention lorsque le panneau de commande comporte un nombre différent de modules de commande ou de groupes de modules de commande.

Il s'agit de modules de commande génériques capables d'assurer la commande de l'ensemble des systèmes fonctionnels susceptibles d'être commandés par le panneau 1.

Chaque ensemble de modules de commande comporte en réalité un module de commande maître I et trois modules de commande esclave II, III et IV configurables chacun par le module de commande maître. Comme le montre la figure 2, et comme indiqué précédemment, chaque module de commande maître ou esclave comporte un écran E associé à deux organes de commande tels que O1 et O2, de type numérique ou électromécanique, comprenant ici un bouton rotatif et un bouton poussoir et à une unité de calcul C. Les unités de calcul sont reliées entre elles de sorte que les unités de calcul des modules esclaves sont reliées chacune à l'unité de calcul C du module maître.

Les unités de calcul peuvent être intégrées aux modules de commande ou être partagées avec plusieurs modules. Elles peuvent en outre être implantées ailleurs dans le panneau de commande. Elles peuvent par ailleurs être réalisées sous la forme d'un ou de plusieurs calculateurs.

Les unités de calcul C incorporent, stocké en mémoire, un algorithme de commande dûment programmé pour configurer l'affichage sur l'écran E et configurer les organes de commande.

En se référant à la figure 1, les panneaux de commande I sont adaptés pour provoquer, sous le contrôle de l'unité de calcul C, l'affichage, par exemple sous la forme d'un menu déroulant, de l'ensemble des systèmes fonctionnels susceptibles d'être commandés par le panneau de commande I. En manipulant le bouton rotatif O2, le pilote ou le copilote sélectionne l'un des systèmes fonctionnels puis valide la sélection au moyen des boutons de commande O1.

Cette sélection provoque l'affichage sur l'écran E du module de commande maître d'un certain nombre d'informations générales portant sur le système fonctionnel sélectionné. Par ailleurs, le module de commande maître I configure les modules de commande esclaves en fonction du système fonctionnel sélectionné. Il s'agit d'une part de configurer l'affichage d'informations sur l'écran E de chaque module de commande esclave et de configurer le comportement de chacun des organes de commande O1 et O2 des modules esclaves en fonction du système fonctionnel sélectionné. Pour mettre en œuvre cette configuration, on pourra prévoir que le module maître envoie à l'unité de calcul du module esclave concerné un signal de commande de configuration pour mettre en œuvre un algorithme stocké en mémoire apte à provoquer la configuration de ce module esclave.

Dans l'exemple de réalisation illustré, un premier système fonctionnel sélectionné est le système d'alimentation en carburant de l'avion. Ainsi, un certain nombre d'informations portant sur l'état du système d'alimentation sont présentées sur l'écran du module de commande maître. Il s'agit par exemple de la consommation instantanée et de la quantité de carburant restant dans chaque réservoir de l'avion « LEFT TANK » et « RIGHT TANK ».

Ces informations sont détaillées sur l'écran des modules de commande esclaves II et III. Des fonctionnalités additionnelles « FUEL » relatives au système d'alimentation en carburant sont détaillées sur le troisième module de commande esclave III qui peuvent chacune à leur tour être commandées.

En ce qui concerne l'autre ensemble E2 de modules de commande, le système fonctionnel sélectionné est le système d'alimentation de l'avion en électricité.

Les informations présentées sur l'écran E du module de commande maître sont détaillées sur l'écran de chaque module de commande esclave (GEN2, EXT2 et BAT2) de sorte que chaque fonction peut être séparément commandée.

Le panneau de commande I comporte ainsi un certain nombre de modules de commande génériques organisés sous la forme de modules de commande maître et esclave qui sont chacun susceptibles de commander un ensemble de fonctions.

Ainsi, contrairement aux panneaux de commande selon l'état de la technique, selon lesquels chaque panneau de commande est dédié à une unique fonction, les modules de commande esclaves sont des modules génériques, susceptibles d'être utilisés pour l'ensemble des fonctions susceptibles d'être commandées par le panneau et sont chacun adaptés pour commander plusieurs fonctions sélectionnées à partir du module maître, ce qui permet de rendre configurable le panneau et d'apporter des informations et des fonctionnalités visuelles supplémentaires. Il peut s'agir de reconfigurer les états des systèmes fonctionnels en fonction des actions, de changer le mode de présentation d'informations, par exemple en proposant un affichage clignotant ou en changeant de couleur certains types d'informations sensibles.

L'invention permet également de réduire le nombre de modules de commande et, par conséquent, de diminuer le câblage.

Il est également possible de personnaliser et de mettre à jour les panneaux de commande de l'aéronef en faisant aisément des mises à jour logicielles, par exemple pour proposer des options supplémentaires ou des traductions.

L'invention permet par ailleurs la préparation et l'adaptation de l'aéronef pour une mission spécifique en adaptant la configuration des différents modules. Elle permet également de dupliquer et synchroniser les panneaux de commande pour permettre des interactions simultanées, voire synchronisées, une redondance matérielle et une sécurité informatique accrue.

Le panneau qui vient d'être décrit peut en outre se reconfigurer de manière automatique ou manuelle en cas de panne, en cas de problème de disponibilité ou selon les phases d'une mission.

Il peut s'agir, par exemple, de la reconfiguration de l'ensemble du panneau en cas de panne ou de problème de disponibilité de l'un des modules de manière à répartir les fonctionnalités sur les modules restants.

Par exemple, pour un panneau de commande de cockpit comprenant plusieurs modules de commande maîtres pilotant chacun plusieurs modules esclaves, en cas de panne ou d'indisponibilité d'un module maître, la fonction du module maître défaillant pourrait être réattribuée à un autre module, par exemple à un autre module maître. Tel est également le cas des fonctionnalités attribuées à un module esclave qui pourraient être réattribuées à un autre module esclave.

Par ailleurs, comme montré sur la figure 1, le panneau de commande peut être complété par un certain nombre de modules de commande non configurables permettant un accès direct à certaines fonctions.

Le panneau 1 peut ainsi comprendre un premier panneau non configurable V comprenant un certain nombre d'organes de commande, ici au nombre de six, pour l'exécution d'un certain nombre de fonctions spécifiques. Il peut par exemple s'agir de commander le largage du kérosène en cas d'atterrissage d'urgence, de gérer les masques à oxygène, de commander l'évacuation de l'avion, ....

Trois modules de commande non configurables VI, VII et VIII, ici pour la gestion de fonctions en cas de feu, sont également prévus.

## Revendications

1. Panneau de commande configurable pour cockpit d'aéronef, comportant un ensemble de modules de commande génériques comprenant chacun un ensemble d'au moins un organe de commande (O1, O2) manipulable manuellement commandant au moins un écran (E), les modules de commande génériques comprenant au moins un module maître et au moins un module esclave générique relié au module maître et comprenant un écran et au moins un organe de commande, le module maître étant adapté pour configurer l'écran (E) et ledit au moins un organe de commande (O1, O2) dudit module esclave générique, dans lequel l'organe de commande (O1, O2) du module maître constitue un organe de sélection de systèmes fonctionnels, ledit module esclave étant configurable en fonction d'une sélection d'un système fonctionnel et est adapté pour commander plusieurs fonctions sélectionnées à partir du module maître, **caractérisé en ce que** le module maître comprend un écran.

2. Panneau de commande selon la revendication 1, comportant en outre un ensemble d'au moins un module de commande (V, VI, VII, VIII) non configurable dédiés chacun à la commande d'une fonction.

3. Panneau de commande selon l'une des revendications 1 et 2, dans lequel les modules de commande maître et esclave sont associés à au moins une unité de calcul (C) comprenant un algorithme de commande du panneau de commande.

4. Panneau de commande selon la revendication 3, dans lequel les modules de commande esclave comportent chacun une unité de calcul apte à configurer l'affichage sur l'écran et à configurer les organes de commande (O1, O2) en fonction d'une configuration imposée par le module de commande maître.

5. Panneau de commande selon l'une quelconque des revendications 1 à 4, dans lequel les organes de commande comportent au moins un élément choisi parmi un organe de commande numérique et un organe de commande électromécanique.

6. Panneau de commande selon l'une quelconque des revendications 1 à 5, dans lequel l'écran est un écran tactile.

7. Panneau de commande selon l'une quelconque des revendications 1 à 5, dans lequel l'écran est un écran non tactile.

8. Procédé de configuration d'un panneau de commande configurable pour aéronef selon l'une quelconque des revendications 1 à 7, **caractérisé en ce qu'**il comporte les étapes de :
- manipulation d'un module de commande maître pour la sélection d'un système fonctionnel ; et
- configuration de l'écran et d'un ensemble d'au moins un organe de commande d'un ensemble de modules de commande esclave en fonction de la sélection du système fonctionnel.

## Patentansprüche

1. Konfigurierbares Steuerpanel für ein Flugzeugcockpit, das eine Anordnung von generischen Steuermodulen aufweist, von denen jedes eine Anordnung von mindestens einer manuell bedienbaren Steuereinrichtung (O1, O2) umfasst, die mindestens einen Bildschirm (E) steuert, wobei die generischen Steuermodule mindestens ein Master-Modul umfassen und mindestens ein generisches Slave-Modul, das mit dem Master-Modul verbunden ist und einen Bildschirm und mindestens eine Steuereinrichtung umfasst, wobei das Master-Modul geeignet ist, den Bildschirm (E) und die mindestens eine Steuereinrichtung (O1, O2) des generischen Slave-Moduls zu konfigurieren, wobei die Steuereinrichtung (O1, O2) des Master-Moduls eine Einrichtung zum Wählen von funktionalen Systemen bildet, wobei das Slave-Modul in Abhängigkeit von einer Auswahl eines funktionalen Systems konfigurierbar ist und geeignet ist, mehrere ausgewählte Funktionen vom Master-Modul aus zu steuern, **dadurch gekennzeichnet, dass** das Master-Modul einen Bildschirm umfasst.

2. Steuerpanel nach Anspruch 1, das ferner eine Anordnung von mindestens einem nicht konfigurierbaren Steuermodul (V, VI, VII, VIII) aufweist, von denen jedes zur Steuerung einer Funktion bestimmt ist.

3. Steuerpanel nach einem der Ansprüche 1 und 2, bei dem die Master- und Slave-Steuermodule mindestens einer Recheneinheit (C) zugeordnet sind, die einen Algorithmus zur Steuerung des Steuerpanels umfasst.

4. Steuerpanel nach Anspruch 3, bei dem die Slave-Steuermodule jeweils eine Recheneinheit aufweisen, die geeignet ist, die Anzeige auf dem Bildschirm zu konfigurieren und die Steuereinrichtungen (O1, O2) in Abhängigkeit von einer vom Master-Steuermodul vorgegebenen Konfiguration zu konfigurieren.

5. Steuerpanel nach einem der Ansprüche 1 bis 4, bei dem die Steuereinrichtungen mindestens ein Element aufweisen, das unter einer digitalen Steuereinrichtung und einer elektromechanischen Steuereinrichtung gewählt ist.

6. Steuerpanel nach einem der Ansprüche 1 bis 5, bei dem der Bildschirm ein berührungsempfindlicher Bildschirm ist.

7. Steuerpanel nach einem der Ansprüche 1 bis 5, bei dem der Bildschirm ein nicht berührungsempfindlicher Bildschirm ist.

8. Verfahren zum Konfigurieren eines konfigurierbaren Steuerpanels für ein Flugzeug nach einem der Ansprüche 1 bis 7, **dadurch gekennzeichnet, dass** es die folgenden Schritte umfasst:
- Bedienen eines Master-Steuermoduls zum Auswählen eines funktionalen Systems und
- Konfigurieren des Bildschirms und einer Anordnung von mindestens einer Steuereinrichtung einer Anordnung von Slave-Steuermodulen in Abhängigkeit von der Auswahl des funktionalen Systems.

## Claims

1. Configurable control panel for an aircraft cockpit, comprising a set of generic control modules each comprising a set of at least one manually manipulatable control mechanism (O1, O2) configuring at least one screen (E), the generic control modules comprising at least one master module and at least one generic slave module associated with the master module and comprising a screen and at least one control mechanism, the master module being designed to configure the screen (E) and the said at least one control mechanism (O1, O2) of the said generic slave module, in which the control mechanism (O1, O2) of the master module constitutes a mechanism for selecting functional systems, the said slave module being configurable according to a selection of a functional system and being designed for controlling several functions selected from the master module, **characterized in that** the master module comprises a screen.

2. Control panel according to claim 1, furthermore comprising a set of at least one non-configurable control module (V, VI, VII, VIII) each dedicated to the control of a function.

3. Control panel according to any one of claims 1 to 2, in which the master and slave control modules are associated with at least one processing unit (C) comprising a control algorithm for the control panel.

4. Control panel according to claim 3, in which the slave control modules each comprise a processing unit designed to configure the display on the screen and to configure the control mechanisms (O1, O2) according to a configuration imposed by the master control module.

5. Control panel according to any one of claims 1 to 4, in which the control mechanisms comprise at least one element chosen from between a digital control mechanism and an electromechanical control mechanism.

6. Control panel according to any one of claims 1 to 5, in which the screen is a touch screen.

7. Control panel according to any one of claims 1 to 5, in which the screen is not a touch screen.

8. Method of configuration of a configurable control panel for an aircraft according to any one of Claims 1 to 7, **characterized in that** it comprises the steps for:
- manipulation of a master control module for the selection of a functional system; and
- configuration of the screen and of a set of at least one control mechanism for a set of slave control modules according to the selection of the functional system.
